# EUROPÄISCHE PATENTANMELDUNG

(11) **EP 1 217 197 A2**
(43) Veröffentlichungstag der Anmeldung: **26.06.2002**
(21) Anmeldenummer: 01126824.0
(22) Anmeldetag: 10.11.2001
(51) Int. Cl.: F02D 41/40

(54) **Verfahren und Vorrichtung zur Überwachung eines Abstands zwischen zwei Einspritzvorgängen**

(30) Priorität: 22.12.2000 DE 10064505
(71) Anmelder: ROBERT BOSCH GMBH, 70442 Stuttgart (DE)
(72) Erfinder: Heinzelmann, Michael, 70734 Fellbach (DE)

(57) **Zusammenfassung**

Die vorliegende Erfindung betrifft eine Vorrichtung und ein Verfahren zur Überwachung eines Abstands zwischen einem ersten Einspritzvorgang und einem zweiten Einspritzvorgang eines Verbrennungszyklusses eines Zylinders einer Brennkraftmaschine, in dem bestimmt wird, ob sich ein elektrisches Betätigungsglied nach dem ersten Einspritzvorgang vollständig geöffnet hat und in dem bestimmt wird, ob sich Bestromungssequenzen des elektrischen Betätigungsglieds überlappen. Dann wird abhängig von den Bestimmungsergebnissen der vorhergehenden Bestimmungsvorgänge der Abstand zwischen dem ersten Einspritzvorgang und dem zweiten Einspritzvorgang verändert.

## Beschreibung

Die vorliegende Erfindung betrifft ein Verfahren und eine Vorrichtung zur Überwachung eines Abstands zwischen einem ersten Einspritzvorgang und einem zweiten Einspritzvorgang eines Verbrennungszyklusses eines Zylinders einer Brennkraftmaschine in der die einzelnen Einspritzvorgänge mit einem elektrischen Betätigungsglied gesteuert werden.

Bei bekannten Verfahren und Vorrichtungen zur Steuerung der Kraftstoffzumessung eines Einspritzvorgangs eines Verbrennungszyklusses eines Zylinders einer Brennkraftmaschine werden Magnetventile zur Steuerung des Beginns und des Endes der Einspritzung verwendet.

Die eigentliche Einspritzung ist in modernen Brennkraftmaschinen in mehrere Teileinspritzvorgänge aufgeteilt. Vorzugsweise wird pro Verbrennungszyklus eines Zylinders ein Voreinspritzvorgang durchgeführt, in dem eine kleine Einspritzmenge eingespritzt wird, und ein Haupteinspritzvorgang, in dem die Hauptkraftstoffmenge eingespritzt wird. Bei einer Viertaktbrennkraftmaschine umfaßt der Verbrennungszyklus einen Ansaugtakt, einen Verdichtungstakt, einen Arbeitstakt und einen Ausschubtakt. Neben einem Voreinspritzvorgang und einem Haupteinspritzvorgang können noch weitere Teileinspritzvorgänge vorgesehen sein. So kann beispielsweise noch ein Nacheinspritzvorgang zur Reinigung des Brennraums vorgesehen sein. Ferner ist es möglich, den Voreinspritzvorgang, den Haupteinspritzvorgang und/oder die Nacheinspritzvorgänge jeweils in mehrere Teileinspritzvorgänge aufzuteilen.

Die DE 198 60 393 schlägt vor, einen Ansteuerbeginn für eine folgende Voreinspritzung bei einem Zylinder auf der Grundlage eines gewünschten Abstands zwischen der Vorund der Haupteinspritzung an diesem Zylinder und einem bei einer vorangehenden Einspritzung an einem vorhergehenden Zylinder berechneten Ansteuerbeginn für die Haupteinspritzung zu berechnen. Der Abstand zwischen der Vor- und der Haupteinspritzung ist als Funktion von wenigstens der Drehzahl der Brennkraftmaschine und der eingespritzten Kraftstoffmenge vorgegeben.

Die US 5,402,760 offenbart eine Kraftstoffeinspritzsteuervorrichtung für eine Brennkraftmaschine mit einer Steuereinrichtung, die eine Unterbrechungseinrichtung aufweist, um eine Kraftstoffeinspritzung zwischen einer Piloteinspritzung und einer Haupteinspritzung zu unterdrücken.

Bei dieser Art von Mehrfacheinspritzungen tritt das Problem auf, dass die einzelnen Einspritzvorgänge oft ineinander übergehen. Dies führt dazu, dass beispielsweise ein Teil einer für einen Voreinspritzvorgang bestimmten Kraftstoffmenge in dem Haupteinspritzvorgang in den Zylinder eingespritzt wird. Dies wird als Durchspritzen bezeichnet. Ein Durchspritzen und eine damit verbundene unkontrollierte Erhöhung der Kraftstoffmenge für einen Einspritzvorgang hat bei nockengetriebenen Systemen negative Auswirkungen auf die Abgase der Brennkraftmaschine, das Drehmoment der Brennkraftmaschine und auf die Geräuschemission.

Es ist die Aufgabe der vorliegenden Erfindung ein Verfahren und eine Vorrichtung zur Überwachung eines Abstands zwischen einem ersten Einspritzvorgang und einem zweiten Einspritzvorgang eines Verbrennungszyklusses eines Zylinders einer Brennkraftmaschine in der die einzelnen Einspritzvorgänge durch ein elektrisches Betätigungsglied gesteuert werden, anzugeben.

Diese Aufgabe wird durch die in den Ansprüchen 1 und 9 angegebenen Merkmale gelöst.

Vorteilhaft ermöglicht die vorliegende Erfindung auch beim Auftreten eines unvorhergesehenen Ereignisses, wie beispielsweise einem plötzlichen Abfall der Batteriespannung, eine wohl definierte Abtrennung der einzelnen Spritzvorgänge.

Vorteilhafte und zweckmäßige Ausgestaltungen und Weiterbildungen der Erfindung sind in den Unteransprüchen angegeben.

Im folgenden werden Ausführungsbeispiele der vorliegenden Erfindung unter Bezugnahme auf die begleitenden Figuren beschrieben.
- Figur 1 zeigt: ein Zeitablaufdiagramm mit einem idealisierten Verlauf einer Ventilnadelstellung eines Magnetventils bei zwei aufeinanderfolgenden Einspritzvorgängen eines Verbrennungszyklusses eines Zylinders.
- Figur 2 zeigt: ein Zeitablaufdiagramm eines Einspritzvorgangs.
- Figur 3 zeigt: ein Ausführungsbeispiel der vorliegenden Erfindung mit einer Bestimmungseinrichtung und einer Abstandsänderungseinrichtung.
- Figur 4 zeigt: ein Zeitablaufdiagramm von zwei aufeinanderfolgenden Einspritzvorgängen.
- Figur 5 zeigt: ein erstes Ausführungsbeispiel der Bestimmungseinrichtung und der Abstandsänderungseinrichtung von Figur 3.
- Figuren 6 und 7 zeigen: Flußdiagramme die ein erstes Ausführungsbeispiel der Funktionsweise der in Figur 5 gezeigten Einrichtungen zeigen.
- Figur 8 zeigt: ein zweites Ausführungsbeispiel der Bestimmungseinrichtung und der Abstandsänderungseinrichtung von Figur 3.
- Figur 9 zeigt: ein Flußdiagramm das ein Ausführungsbeispiel der Funktionsweise der in Figur 8 gezeigten Einrichtungen
- Figur 10 zeigt: ein zweites Ausführungsbeispiel 1 der Bestimmungseinrichtung und der Abstandsänderungseinrichtung von Figur 3.
- Figur 11 zeigt: ein Flußdiagramm das ein Ausführungsbeispiel der Funktionsweise der in Figur 10 gezeigten Einrichtungen zeigt.

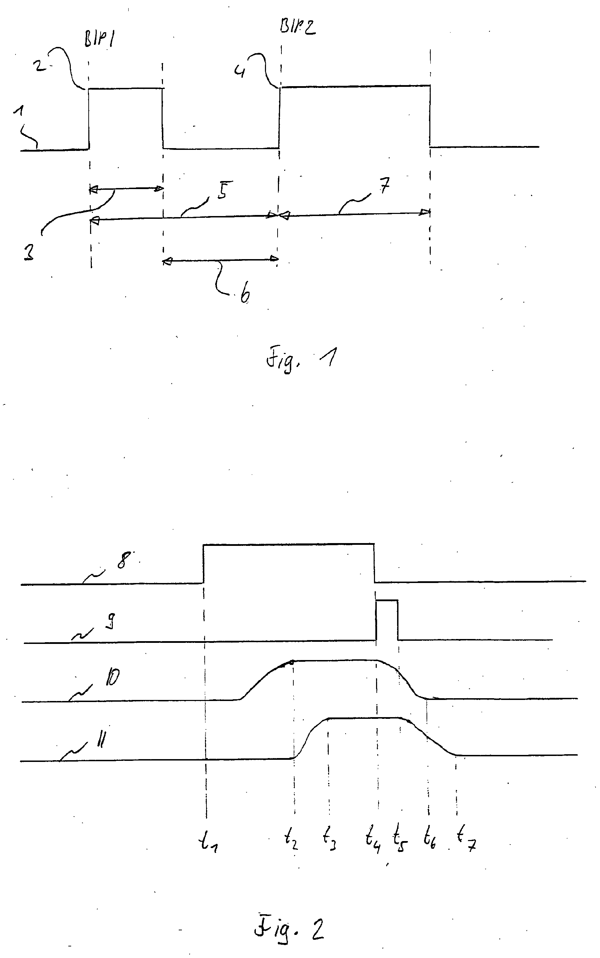

Im folgenden werden mit Verweis auf die Figuren 1 und 2 die prinzipiellen Vorgänge in einem Verbrennungszyklus anhand eines Einspritzsystems mit einer Druckkammer beschrieben.

Die Druckkammer eines solchen Systems weist eine Pumpe auf, die Kraftstoff in der Druckkammer unter Druck setzt. Die Druckkammer weist ferner eine erste und eine zweite Öffnungen auf. Die erste Öffnung kann mit einer Ventilnadel eines Magnetventils verschlossen werden. Die zweite Öffnung, die im folgenden als Düsenöffnung bezeichnet wird, ist mit einer Düsennadel verschlossen und verbindet die Druckkammer mit einem Brennraum eines Zylinders. Wenn die erste Öffnung mittels Betätigung des Magnetventils verschlossen wird und bei gleichzeitiger Betätigung des Pumpenkolbens durch einen Nocken, baut sich in der Druckkammer ein Druck auf. Übersteigt der Druck einen vorbestimmten Düsenöffnungsdruck, öffnet sich die Düsennadel und es wird Kraftstoff in den Brennraum des Zylinders eingespritzt. Wenn die erste Öffnung wieder geöffnet wird, kann der Druck durch die erste Öffnung entweichen. Wenn der Druck unter einen vorbestimmten Düsenschließdruck fällt, wird die Düsennadel wieder geschlossen und die Kraftstoffeinspritzung in den Brennraum des Zylinders beendet.

Figur 1 zeigt ein Zeitablaufdiagramm mit einem idealisierten Verlauf der Ventilnadelstellung des Magnetventils bei zwei aufeinanderfolgenden Einspritzvorgängen eines Verbrennungszyklusses eines Zylinders. Die Bezugsziffer 1 in Figur 1 bezeichnet eine Stellung der Ventilnadel. Die Ventilnadel wird zu einem mit der Bezugsziffer 2 bezeichneten Zeitpunkt vollständig geöffnet. Dieser Zeitpunkt wird als BIP₁ (beginn of injection period 1) oder Förderbeginn eines ersten Einspritzvorgangs bezeichnet. In dieser idealisierten Darstellung wird die Zeit, die die Ventilnadel zum vollständigen Öffnen und vollständigen Schließen benötigt, vernachlässigt. Während des ersten Einspritzvorgangs bleibt die Ventilnadel während einer mit der Bezugsziffer 3 bezeichneten Zeitdauer vollständig geöffnet. Diese Zeitdauer wird als erste Spritzdauer bezeichnet. Die Bezugsziffer 4 bezeichnet einen Förderbeginn einer zweiten Einspritzung. Dieser Zeitpunkt wird als BIP₂ bezeichnet. Ein mit der Bezugsziffer 5 bezeichneterAbstand von dem Förderbeginn der ersten Einspritzung bis zu dem Förderbeginn der zweiten Einspritzung bei dem selben Zylinder wird als Spritzabstand bezeichnet. Weiterhin ergibt sich durch Abzug der Spritzdauer 3 für den ersten Einspritzvorgang von dem Spritzabstand 5 eine sogenannte Spritzpause 6, die für die Trennung des ersten Einspritzvorgangs von dem zweiten Einspritzvorgang bezeichnend ist. Die Bezugsziffer 7 bezeichnet eine Spritzdauer des zweiten Einspritzvorgangs.

Bei magnetventilgesteuerten Systemen, wie beispielsweise solenoidventilgesteuerten Systemen, PDE Systemen (Pump-Nozzle Units oder Pumpe-Düse Systeme), PLD Systemen (Pump-Line-Nozzle Systeme oder Pumpe-Leistungsdüse Systeme), solenoidventilgesteuerten VP Systemen (Distributer Pump Systeme) oder CR Systemen (Common-Rail Systeme), als auch bei den entsprechenden Systemen mit Piezobetätigungsgliedern werden die einzelnen Einspritzvorgänge durch eine elektrische Ansteuerung eines Magnetventils oder eines entsprechenden Piezobetätigungsgliedes gesteuert. Zum Zwecke der einfachen Darstellung wird im folgenden die vorliegende Erfindung beispielhaft anhand eines Systems mit einem Magnetventil beschrieben.

Im folgenden wird mit Verweis auf Figur 2, die ein Zeitablaufdiagramm eines Einspritzvorgangs darstellt, die Funktionsweise des angegebenen Systems mit einer Druckkammer und einem Magnetventil detailliert beschrieben.

Die Bezugsziffer 8 bezeichnet einen Verlauf einer Bestromung des Magnetventils. Zum Zeitpunkt t₁ wird das Magnetventil mit Strom beaufschlagt und zum Zeitpunkt t₄ wird die Stromzufuhr an das Magnetventil unterbrochen. Die Bezugsziffer 9 bezeichnet den Verlauf einer Schnelllöschungsstrombeaufschlagung. Zwischen den Zeitpunkten t₄ und t₅ wird das Magnetventil durch Anlegen einer negativen Klemmenspannung entstromt.

Die Bezugsziffer 10 bezeichnet den Verlauf eines Hubs des Magnetventils, wobei das Magnetventil am Anfang, d. h. vor dem Zeitpunkt t₁, vollständig geöffnet ist. Die Bezugsziffer 11 bezeichnet den Verlauf eines Hubs der Düsennadel des Einspritzsystems, wobei die Düsennadel am Anfang, d. h. vor dem Zeitpunkt t₁, vollständig geschlossen ist.

Wie aus Figur 2 ersichtlich ist, vergeht nach Beginn der Bestromung des Magnetventils zum Zeitpunkt t₁ eine Zeitdauer [t₂-t₁] bis das Magnetventil zum Zeitpunkt t₂ vollständig geschlossen ist. Nach dem vollständigen Schließen des Magnetventils baut sich der Druckkammer ein Druck auf. Zum Zeitpunkt t₃ wird der Düsennadelöffnungsdruck überschritten und das System beginnt mit der Einspritzung.

Das Ende des Einspritzvorgangs wird durch eine Unterbrechung der Stromzufuhr an das Magnetventil zum Zeitpunkt t₄ eingeleitet. Dadurch öffnet sich das Magnetventil wieder und der Druck in der Druckkammer wird abgebaut. Um eine kurze Absteuerzeit, d. h. ein schnelles Öffnen des Magnetventils und damit ein schnelles Schließen der Düsenöffnung zu erreichen, wird zum Zeitpunkt t₄ der Unterbrechung der Stromzufuhr an das Magnetventil eine Schnelllöschung vorgenommen. Während der Schnelllöschung, d.h. während der Zeitdauer [t₅-t₄], wird eine negative Klemmenspannung an das Magnetventil gelegt um es schnell zu entstromen, d.h. die in dem Magnetventil gespeicherte Energie schnell abzubauen.

Eine Zeitdauer [t₆-t₄], die das Magnetventil von dem vollständig geschlossenen Zustand bis zum vollständig geöffneten Zustand benötigt, kann je nach Art und Bauart des Magnetventils und Auslegung der Schnelllöschung, d. h. der Schnelllöschungsdauer, länger oder kürzer sein als die Schnelllöschungsdauer [t₅-t₄]. Nachdem sich der Druck in dem System nach dem Öffnen des Magnetventils soweit verringert hat, dass ein Düsennadelschließdruck unterschritten wird, endet der Einspritzvorgang mit dem Schließen der Düsennadel zum Zeitpunkt t₇.

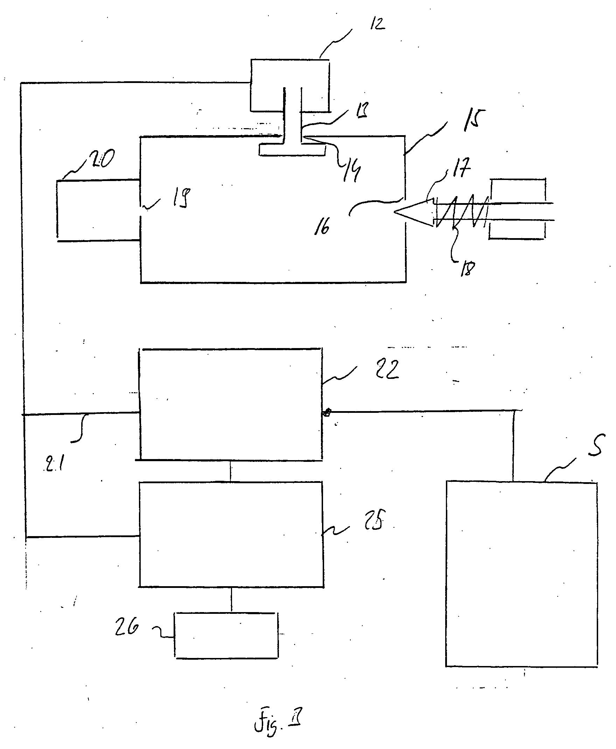

Im folgenden wird nun mit Verweis auf Figur 3 ein Ausführungsbeispiel einer erfindungsgemäßen Vorrichtung zur Überwachung eines Abstands zwischen einem ersten Einspritzvorgang und einem zweiten Einspritzvorgang eines Verbrennungszyklusses eines Zylinders einer Brennkraftmaschine in der die einzelnen Einspritzvorgänge mit einem elektrischen Betätigungsglied gesteuert werden, beschrieben.

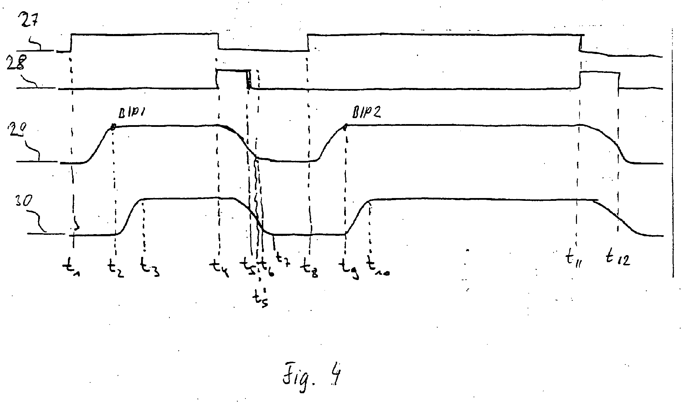

Das Bezugszeichen S in Figur 3 bezeichnet eine Einspritzsteuereinrichtung, wie beispielsweise ein Motorsteuergerät, die Zeitgaben für die Bestromung des elektrischen Betätigungsglieds, das hier als Magnetventil 12 ausgestaltet ist, auf der Grundlage von Stellgrößen und Einflußgrößen der Brennkraftmaschine ermittelt. Die Stellgrößen und Einflußgrößen umfassen u.a. ein Solldrehmoment der Brennkraftmaschine, eine Drehzahl, eine Temperatur und einen Lastzustand. Die Zeitgaben umfassen Zeitpunkte t₁, t₄, t₅, t₈, t₁₁ und t₁₂ sowie einen Wunschabstand [t₉-t₂], die anhand von Figur 4 weiter erläutert werden. Die Einspritzsteuereinrichtung S ermittelt die Zeitgaben vorzugsweise anhand von Kennlinien und Kennfeldern.

Das Magnetventil 12 umfasst eine Ventilnadel 13 die in einer vollkommen geschlossenen Position eine Öffnung 14 in einer Druckkammer 15 verschließt und in einer vollkommen geöffneten Position die Öffnung 14 in der Druckkammer 15 offen läßt. Die Druckkammer 15 weist eine weitere Öffnung 16 auf, die durch eine Düsennadel 17 verschlossen wird. Die Düsennadel 17 ist zwischen einer ersten vollkommen geschlossenen Position, in der sie die Düsenöffnung 16 in der Druckkammer vollkommen verschließt, und einer zweiten vollkommen geöffneten Position, in der die Düsenöffnung 16 in der Druckkammer offen ist, versetzbar. Die Düsenöffnung 16 in der Druckkammer 15 ist dergestalt angeordnet, dass bei geöffneter Düsennadel 17 Kraftstoff aus der Druckkammer 15 in einen Brennraum eines Zylinder (nicht dargestellt) eingespritzt wird. Die Düsennadel 17 wird mit einer Feder 18 in die erste vollkommen geschlossene Position vorgespannt.

Die Druckkammer 15 weist eine weitere Öffnung 19 auf, durch die die Druckkammer 15 mit einer Einrichtung 20 zum Aufbau eines Kraftstoffdrucks in der Druckkammer 15 verbunden ist. Im vorliegenden Ausführungsbeispiel ist die Einrichtung 20 zum Aufbau eines Kraftstoffdrucks in der Druckkammer 15 eine Pumpe.

Das Magnetventil 12 ist mittels einer Stromzufuhrleitung 21 mit einer Bestimmungseinrichtung 22 zur Bestimmung, ob sich die Ventilnadel 13 nach einem ersten Einspritzvorgang vollständig geöffnet hat und ob sich Bestromungssequenzen des Magnetventils 12 überlappen, verbunden. In der Betätigungseinrichtung 22 sind Kennfelder abgelegt, aus denen die Zeitpunkte t₂ und t₆ des vollständigen Öffnens und Schließens der Ventilnadel 13 aufgrund zumindest einer Zustandskenngröße der Brennkraftmaschine ausgelesen werden. Diese Bestimmung kann auch in einem Steuergerät ausgeführt werden bzw. mittels einer Softwarelösung im Steuergerät implementiert werden.

Die Stromzufuhrleitung 21 des Magnetventils 12 ist mit einer Abstandsänderungseinrichtung 25 verbunden, die wiederum mit der Bestimmungseinrichtung 22 verbunden ist. Die Abstandsänderungseinrichtung 25 verändert den Abstand zwischen dem ersten Einspritzvorgang und einem zweiten Einspritzvorgang eines Verbrennungszyklusses eines Zylinders, wenn die Bestimmungseinrichtung 22 bestimmt hat, dass sich nach dem Einspritzvorgang die Ventilnadel 13 des Magnetventils 12 nicht vollständig geöffnet hat, oder sich die Bestromungssequenzen des Magnetventils 12 überlappen. Die Abstandsänderungseinrichtung 25 verändert den Abstand zwischen dem ersten Einspritzvorgang und dem zweiten Einspritzvorgang durch Steuerung einer elektrischen Verbindung zwischen der elektrischen Stromzufuhrleitung 21 und einer Stromversorgung 26. Die Abstandsveränderungseinrichtung 25 kann auch mittels einer Softwarelösung in einem Steuergerät implementiert werden.

Im folgenden wird nun die Funktionsweise der in Figur 3 gezeigten Vorrichtung beschrieben. In einem ersten Schritt bestimmt die Bestimmungseinrichtung 22, ob sich die Ventilnadel 13 des Magnetventils 12 nach dem ersten Einspritzvorgang vollständig geöffnet hat. Ferner bestimmt die Bestimmungseinrichtung 22, ob sich Bestromungssequenzen des Magnetventils 12 überlappen. Wenn die Bestimmungseinrichtung 22 bestimmt hat, dass sich die Ventilnadel 13 nach dem ersten Einspritzvorgang nicht vollständig geöffnet hat, oder wenn die Bestimmungseinrichtung 22 bestimmt hat, dass sich die Bestromungssequenzen des Magnetventils 12 überlappen, verändert die Abstandsänderungseinrichtung 25 den Abstand zwischen dem ersten Einspritzvorgang und dem zweiten Einspritzvorgang indem sie einen Stromkreis zwischen dem Magnetventil 12 und der Stromversorgung 26 dergestalt schließt, das sich eine Distanz zweier aufeinanderfolgender Bestromungssequenzen des Magnetventils 12 entsprechend verändert. In anderen Worten, es werden die Bestromungsparameter des Magnetventils 12 verändert.

Zusammengefasst überwacht die erfindungsgemäße Vorrichtung folgende Randbedingungen:
a) Trennung der beiden Einspritzvorgänge voneinander, und
b) Trennung einer Bestromungssequenz für den ersten Einspritzvorgang von einer Bestromungssequenz für den zweiten Einspritzvorgang.

Gemäß der Randbedingung a) ist es erforderlich, dass die Ventilnadel 13 für ein stabiles deterministisches Einspritzverhalten nach dem ersten Einspritzvorgang vor dem zweiten Einspritzvorgang in der vollständig geöffneten Position war. Diese Art der Einspritzung wird auch als absolute Einspritzung bezeichnet.

Gemäß der Randbedingung b) darf mit der Bestromung des Magnetventils für den zweiten Einspritzvorgang nicht begonnen werden, bevor die Schnelllöschung des ersten Einspritzvorgangs beendet ist. Wenn diese Randbedingung nicht eingehalten wird, kann es zu Auslöschungen von Bestromungssequenzen kommen, was zu unkontrollierten Einspritzvorgängen mit unkontrollierten Kraftstoffeinspritzmengen führt.

Dies wird nun mit Verweis auf Figur 4 weiter beschrieben. Figur 4 zeigt ein Zeitablaufdiagramm von zwei aufeinanderfolgenden Einspritzungen, anhand dessen die Funktionsweise der in Figur 3 gezeigten Vorrichtung, in der die beiden o. g. Randbedingungen eingehalten werden, weiter erläutert wird.

Die Bezugsziffer 27 bezeichnet den Verlauf des an das Magnetventil 12 angelegten Stromes und die Bezugsziffer 28 bezeichnet den zeitlichen Verlauf der Schnelllöschung. Der Stromverlauf 27 und der Stromverlauf der Schnelllöschung 28 zeigen Bestromungssequenzen des Magnetventils 12. Die Bestromungssequenz ist das Bestromen des Magnetventils, wobei zwischen einer Bestromungssequenz für den ersten Einspritzvorgang (t₁ bis t₅) und einer Bestromungssequenz für den zweiten Einspritzvorgang (ab t₈) unterschieden wird. Beide Stromverläufe 27 und 28 zeigen, dass vor dem Zeitpunkt t₁ an das Magnetventil 12 kein Strom angelegt wird.

Die Bezugsziffer 29 bezeichnet den Hub der Ventilnadel 13 des Magnetventils 12, wobei die Ventilnadel 13 zum Zeitpunkt t₁ in dem vollkommen geöffneten Zustand ist, d. h. die Öffnung 14 in der Druckkammer 15 nicht verschlossen ist und zum Zeitpunkt t₂ in dem vollkommen geschlossenen Zustand ist, d. h. die Öffnung 14 in der Druckkammer 15 verschlossen ist. Der Zeitpunkt t₂ des Beginns des ersten Einspritzvorgangs wird wie in Figur 1 als BIP₁ bezeichnet und der Zeitpunkt t₉ des Beginns des zweiten Einspritzvorgangs wird als BIP₂ bezeichnet.

Die Bezugsziffer 30 bezeichnet den Verlauf des Düsennadelhubs der Düsennadel 17, wobei zum Zeitpunkt t₁ die Düsennadel in dem vollkommen geschlossenen Zustand ist, d. h. die Öffnung 16 in der Druckkammer 15 verschlossen ist, so dass keine Einspritzung stattfindet und die Düsennadel 17 zum Zeitpunkt t₃ in dem vollkommen geöffneten Zustand ist, so dass durch die Öffnung 16 in der Druckkammer 15 eine Kraftstoffeinspritzung in den Zylinder stattfindet.

Figur 4 ist zu entnehmen, dass nach Beginn der Bestromung des Magnetventils 12 zum Zeitpunkt t₁ eine Zeitdauer [t₂-t₁] verstreicht, bis die Ventilnadel 13 des Magnetventils in dem vollständig geschlossenem Zustand ist. Wenn die Öffnung 14 in der Druckkammer 15 verschlossen ist, baut die Pumpe 20 in der Druckkammer 15 einen Druck auf. Wenn nach einer weiteren Verzugsdauer [t₃-t₂] der Düsenöffnungsdruck überschritten wird, d. h. in dem in Figur 3 gezeigten Ausführungsbeispiel der Druck in der Druckkammer 15 so groß ist, dass die Düsennadel 17 gegen die Vorspannung der Feder 18 in die geöffnete Position versetzt wird, beginnt zum Zeitpunkt t₃ die Einspritzung des Kraftstoffs durch die Öffnung 16 in den Zylinder. Das Ende des Einspritzvorgangs wird durch das Beenden der Bestromung des Magnetventils 12 zum Zeitpunkt t₄ eingeleitet. Hierdurch wird die Ventilnadel 13 des Magnetventils 12 wieder in die Anfangsstellung, nämlich die vollkommen geöffnete Stellung, zurückversetzt. Da nun der Druck in der Druckkammer 15 durch die Öffnung 14 entweichen kann, wird nach Unterschreiten des Düsennadelschließdrucks, der durch die Feder 18 bestimmt wird, die Düsennadel 17 durch die Vorspannung der Feder 18 wieder in die geschlossene Position versetzt, so dass die Düsennadel 17 zum Zeitpunkt t₇ die Öffnung 16 vollkommen verschließt.

Die Bestimmungseinrichtung 22 bestimmt die Absteuerdauer [t₆-t₄] von dem Ende der Bestromung (dem Ende der Bestromungssequenz des zweiten Einspritzvorgangs) des Magnetventils 12 zum Zeitpunkt t₄ bis zum Zeitpunkt t₆, an dem die Ventilnadel 13 des Magnetventils 12 wieder in der vollkommen geöffneten Position ist durch Auslesen der Zeitpunkte t₄ und t₆ aus einem Kennfeld

Um eine kurze Absteuerdauer [t₆-t₄] des Magnetventils 12, d. h. ein schnelles Öffnen der Ventilnadel 13 des Magnetventils 12 und damit ein schnelles Schließen der Düsenöffnung 16 zu erreichen, wird am Ende der Bestromung des Magnetventils 12 eine Schnelllöschung 28 vorgenommen. Während der Schnelllöschung, d.h. während der Zeitdauer [t₅-t₄] wird eine negative Klemmenspannung an das Magnetventil 12 angelegt. Die Schnelllöschung dient dazu, die in dem Magnetventil gespeicherte Energie schnell abzubauen. Die Zeitgaben t₄ und t₅ werden von der Einspritzsteuereinrichtung S vorgegeben. Vorzugsweise wird die Schnelllöschungsdauer mit einem Sicherheitsfaktor beaufschlagt der von der maximalen Momentanbeschleunigung der Brennkraftmaschine abhängt. Das Ende der mit Sicherheitsfaktor beaufschlagten Schnelllöschungsdauer ist mit dem Zeitpunkt t₅. bezeichnet. Ob während der gesamten mit Sicherheitsfaktor beaufschlagten Schnelllöschung eine negative Klemmenspannung an das Magnetventil 12 angelegt wird ist wählbar.

Zum Zeitpunkt t₈, der ebenfalls von der Einspritzsteuereinrichtung S vorgegeben wird, wird die Bestromung des Magnetventils 12 für den zweiten Einspritzvorgang eingeleitet. Zum Zeitpunkt t₉ ist die Ventilnadel 13 des Magnetventils in der vollkommen geschlossenen Position. Dieser Zeitpunkt wird für den zweiten Einspritzvorgang BIP₂ genannt und wird mittels der Bestimmungseinrichtung 22 ermittelt, die die Zeitpunkte t₉ und t₁₂ aus einem Kennfeld auf der Grundlage von zumindest einer Brennkraftmaschinenzustandsgröße ausliest. Zum Zeitpunkt t₁₀ beginnt die Einspritzung für den zweiten Einspritzvorgang.

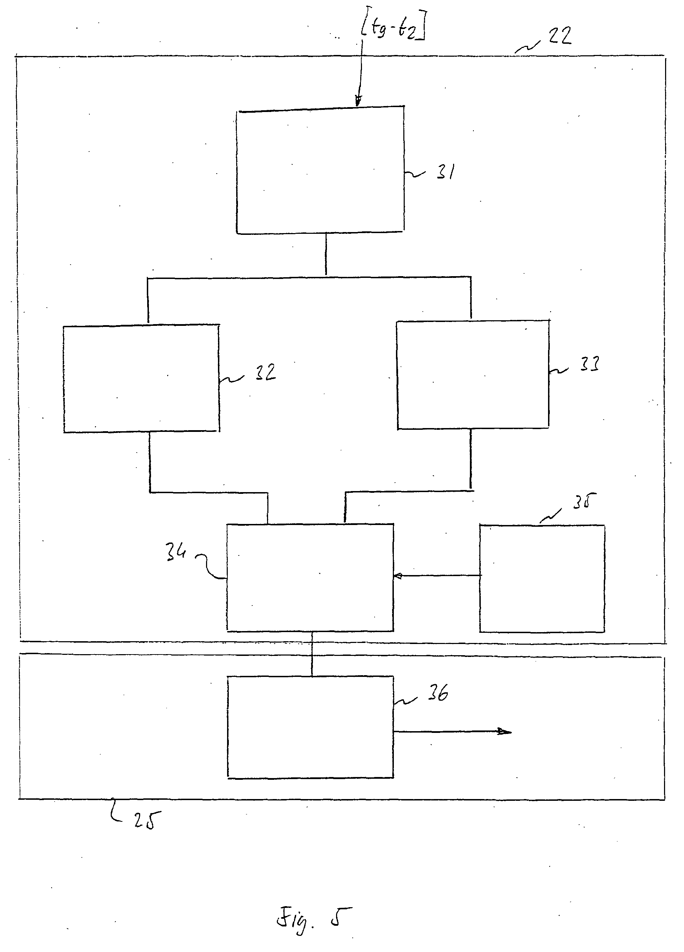

Nun wird mit Verweis auf Figur 5, die ein erstes Ausführungsbeispiel der Bestimmungseinrichtung 22 und der Abstandsänderungseinrichtung 25 zeigt, beschrieben, wie der von der Einspritzsteuereinrichtung S an das Magnetventil 12 gegebene Wunschabstand [t₉-t₂] gemäß den oben angegebenen Randbedingungen a) und b) überwacht wird. Zum Zeitpunkt t₁₁ endet die Bestromung des Magnetventils 12.

Die Bezugsziffer 31 in Figur 5 bezeichnet einen ersten Subtrahierer zum Ermitteln einer Zeitdauer [t₉-t₄] mittels Subtraktion einer Förderdauer [t₄-t₂] von dem Wunschabstand [t₉-t₂]. Die Förderdauer [t₄-t₂] von dem Zeitpunkt t₂, an dem die Ventilnadel 13 in der vollkommen geschlossenen Position ist, bis zum Zeitpunkt t₄ am Ende der Bestromungssequenz des Magnetventils 12, wird mittels der Bestimmungseinrichtung 22 aus einem Kennfeld auf der Grundlage von zumindest einer Brennkraftmaschinenzustandsgröße ausgelesen.

Der erste Subtrahierer 31 gibt das Subtraktionsergebnis, nämlich die Zeitdauer [t₉-t₄], an einen zweiten Subtrahierer 32 und an einen dritten Subtrahierer 33 aus. Der zweite Subtrahierer 32 ermittelt die Förderpause [t₉-t₆] mittels Subtraktion der Absteuerdauer [t₆-t₄] des Magnetventils von der von dem ersten Subtrahierer 31 gelieferten Zeitdauer [t₉-t₄]. Der dritte Subtrahierer 33 ermittelt eine Zeitdauer [t₉-t₅,] mittels Subtraktion einer mit einem Dynamikfaktor korrigierten Schnelllöschungsdauer [t_{5'}-t₄] von der von dem ersten Subtrahierer 31 gelieferten Zeitdauer [t₉-t₄].

Die mit dem Dynamikfaktor korrigierte Schnelllöschungsdauer [t_{5'}-t₄] wird von einer hier nicht dargestellten Berechnungseinrichtung mittels Berechnung der Schnelllöschungsdauer [t₅-t₄] vor dem Beginn des ersten Einspritzungsvorgangs BIP₁ und Multiplikation der Schnelllöschungsdauer [t₅-t₄] mit einem Dynamikfaktor, der auf der Grundlage einer Drehzahlerhöhung durch die Einspritzung ermittelt wird, berechnet. Die Berechnungseinrichtung zum Berechnen der Zeitdauer [t₅,-t₄] ist vorzugsweise in der Einspritzungssteuereinrichtung S angeordnet.

Der zweite Subtrahierer 32 und der dritte Subtrahierer 33 geben jeweils die Subtraktionsergebnisse an einen Vergleicher 34 aus.

Die Bestimmungseinrichtung 22 weist ferner eine Erfassungseinrichtung 35 zum Erfassen einer Schließzeit [t₉-t₈] der Ventilnadel 13 des Magnetventils 12 auf. Die Erfassungseinrichtung 35 erfasst die Schließzeit [t₉-t₈], d. h. die Zeitdauer, die nach einem Beginn einer Bestromung des Magnetventils (hier t₈) verstreicht, bis die Ventilnadel 13 die Öffnung 14 vollständig verschließt (hier t₉). Die Erfassungseinrichtung 35 kann auch mittels einer Softwarelösung in einem Steuergerät das einen Mikroprozessor aufweist, implementiert werden. Die Erfassungseinrichtung 35 gibt diese Schließzeit [t₉-t₈] an den Vergleicher 34 aus.

Der Vergleicher 34 vergleicht die Schließzeit [t₉-t₈] mit der von dem dritten Subtrahierer 33 gelieferten Zeitdauer [t₉-t₅,] von einem berechneten Ende der Schnelllöschung des ersten Einspritzvorgangs, bis zum Beginn des zweiten Einspritzvorgangs und mit der von dem zweiten Subtrahierer 32 gelieferten Förderpause [t₉-t₆].

Entsprechend dem Ergebnis des Vergleichs gibt der Vergleicher 34 ein Signal an eine Verlängerungseinrichtung 36 aus, die in der Abstandsänderungseinrichtung 25 angeordnet ist. Die Verlängerungseinrichtung 36 verlängert den Wunschabstand [t₉-t₂] auf der Grundlage des Ausgangssignals des Vergleichers 34 dergestalt, daß sie den Abstand [t₉-t₂] um die Dauer der Schließzeit [t₉-t₈] abzüglich der Förderpause [t₉-t₆] verlängert, wenn die Schließzeit größer oder gleich der Zeitdauer [t₉-t_{5'}] oder der Förderpause [t₉-t₆] ist. Die Verlängerungseinrichtung 36 verlängert den Wunschabstand [t₉-t₂], indem sie den Stromkreis zwischen dem Magnetventil 12 und der Stromversorgung 26 entsprechend dem verlängerten Abstand schaltet. Damit wird die erste Einspritzung nach vorne verschoben.

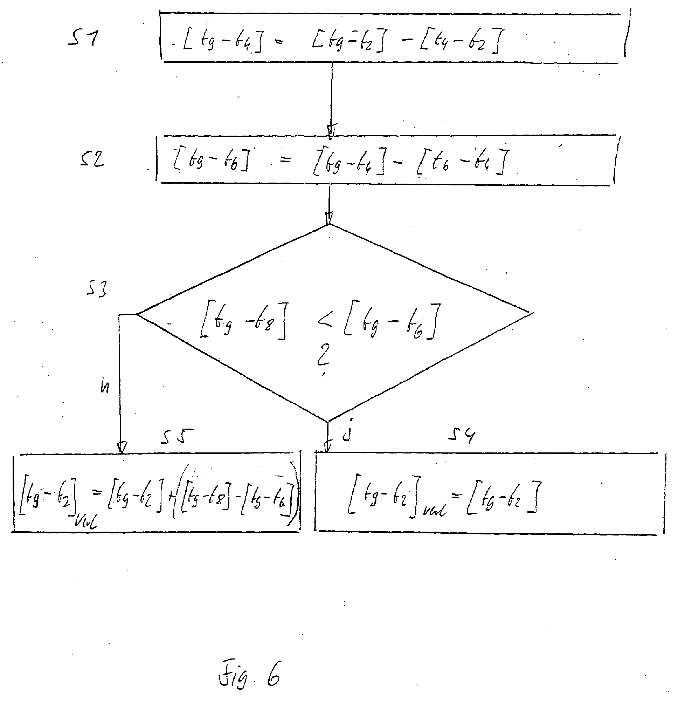

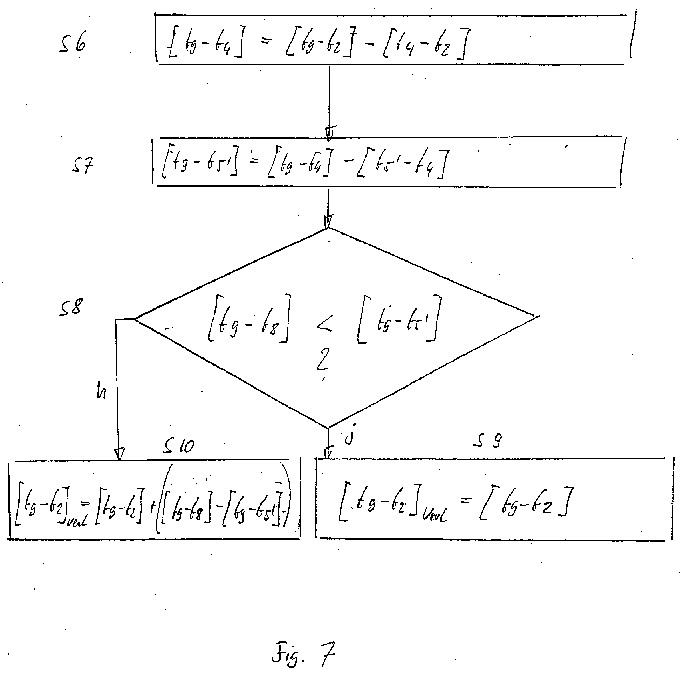

Ein Ausführungsbeispiel der Funktionsweise der in Figur 5 gezeigten Einrichtungen wird nun mit Verweis auf Figur 6 und Figur 7 beschrieben. Figur 6 zeigt die Funktionsweise der Vorrichtung von Figur 5 hinsichtlich der Überwachung der Randbedingung a).

In Schritt S1 wird eine Zeitdauer [t₉-t₄] mittels Subtraktion der Förderdauer [t₄-t₂] von dem Wunschabstand [t₉-t₂] ermittelt. Mittels der Zeitdauer [t₉-t₄] wird dann in Schritt S2 die Dauer der Förderpause [t₉-t₆] zwischen dem ersten Einspritzvorgang und dem zweiten Einspritzvorgang, während der keine Einspritzung in den Zylinder stattfindet, berechnet. Die Förderpause [t₉-t₆] wird durch Subtraktion der Absteuerdauer [t₆-t₄] von der Zeitdauer [t₉-t₄] erhalten.

Im folgenden findet in Schritt S3 ein Vergleich der Schließzeit [t₉-t₈] der Ventilnadel 13 des Magnetventils 12 mit der in Schritt S2 ermittelten Förderpause [t₉-t₆] statt. Wenn die Schließzeit [t₉-t₈] kürzer als die Förderpause [t₉-t₆] ist, dann ist die Förderpause [t₉-t₆] groß genug, um ein vollständiges Öffnen der Ventilnadel 13 des Magnetventils 12 zwischen dem ersten Einspritzvorgang und dem zweiten Einspritzvorgang sicherzustellen. In diesem Fall verändert die Abstandsänderungseinrichtung 25 den Wunschabstand [t₉-t₂] in Schritt S4 nicht. Dies ist in Figur 6 mit [t₉-t₂]ᵥₑᵣₗ = [t₉-t₂] dargestellt.

Wird jedoch in Schritt S3 festgestellt, daß die Schließzeit [t₉-t₈] größer oder gleich der Förderpause [t₉-t₆] ist, wird in Schritt S5 der Wunschabstand [t₉-t₂] um die Dauer der Schließzeit [t₉-t₈] abzüglich der Förderpause [t₉-t₆] verlängert. Dies ist in Figur 6 mit [t₉t₂]ᵥₑᵣₗ = [t₉-t₂] + ([t₉-t₈] - [t₉-t₆]) dargestellt. Durch die Verlängerung des Wunschabstands [t₉-t₂] mittels der Verlängerungseinrichtung 36 kann dann sichergestellt werden, dass die Ventilnadel 13 des Magnetventils zwischen den zwei Einspritzvorgängen in den vollkommen geöffneten Zustand versetzt wird.

Nun wird mit Verweis auf Figur 7 die Funktionsweise der in Figur 5 gezeigten Einrichtungen hinsichtlich der Überwachung der Randbedingung b) beschrieben. Der Schritt S6 in Figur 7 entspricht dem Schritt S1 in Figur 6, so dass für eine detaillierte Beschreibung hierzu auf die Beschreibung zu Schritt S1 in Figur 6 verwiesen werden kann.

In Schritt S7 wird von dem Subtraktionsergebnis des Schrittes S6 die mit dem. Dynamikfaktor korrigierte Schnelllöschungsdauer [t_{5'}-t₄] subtrahiert. Dadurch ergibt sich eine Zeitdauer [t₉-t_{5'}], die in Schritt S8 mit der Schließzeit [t₉-t₈] verglichen wird. Wenn die Schließzeit [t₉-t₈] kleiner als die Zeitdauer [t₉-t_{5'}] ist, geht die Verarbeitung weiter zu Schritt S9. Schritt S9 entspricht Schritt S4 von Figur 6, so dass für eine detaillierte Beschreibung hierzu auf Schritt S4 in Figur 6 verwiesen wird.

Ergibt der Vergleich in Schritt S8, dass die Schließzeit [t₉-t₈] größer oder gleich der Zeitdauer [t₉-t₅,] ist, wird in Schritt S10 der Wunschabstand [t₉-t₂] um die Dauer der Schließzeit [t₉-t₈] abzüglich der Zeitdauer [t₉-t₅,] verlängert. Dies ist in Figur 7 mit [t₉-t₂]ᵥₑᵣₗ = [t₉-t₂] + ([t₉-t₈] - [t₉-t₅,]) dargestellt.

Mittels des beschriebenen Verfahrens und der angegebenen Vorrichtung wird auf einfache und kostengünstige Art und Weise sichergestellt, dass kein Durchspritzen zwischen zwei Einspritzvorgängen eines Verbrennungszyklusses eines Zylinders stattfindet und keine Überlappung zwischen Bestromungssequenzen des Magnetventils auftreten.

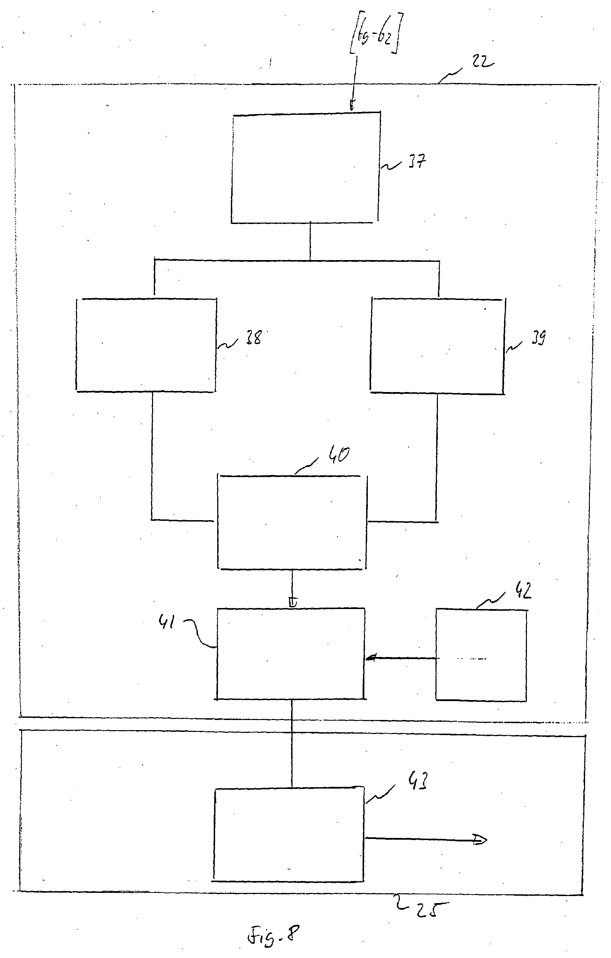

Figur 8 zeigt ein zweites Ausführungsbeispiel der Bestimmungseinrichtung 22 und der Abstandsänderungseinrichtung 25 von Figur 3.

Bezugsziffer 37 bezeichnet einen ersten Subtrahierer, der von dem Wunschabstand [t₉t₂] die Förderdauer [t₄-t₂] subtrahiert. Das Subtraktionsergebnis wird an einen zweiten Subtrahierer 38 und an einen dritten Subtrahierer 39 ausgegeben.

Der zweite Subtrahierer 38 ermittelt die Förderpause [t₉-t₆] mittels Subtraktion der Absteuerdauer [t₆-t₄] des Magnetventils von der in dem ersten Subtrahierer 37 ermittelten Zeitdauer. Die in dem zweiten Subtrahierer 38 ermittelte Förderpause [t₉ - t₆] wird an eine Minimumermittlungseinrichtung 40 ausgegeben.

In dem dritten Subtrahierer 39 wird von der von dem ersten Subtrahierer 37 gelieferten Zeitdauer die mit dem Dynamikfaktor korrigierte Schnelllöschungsdauer [t₅,-t₄] subtrahiert. Die mit dem Dynamikfaktor korrigierte Schnelllöschungsdauer [t₅,-t₄] wird in der gleichen Art und Weise, wie in dem mit Verweis auf Figur 5 beschriebenen Ausführungsbeispiel, berechnet. Das Subtraktionsergebnis des dritten Subtrahierers 39 wird an die Minimumermittlungseinrichtung 40 ausgegeben.

Die Minimumermittlungseinrichtung 40 ermittelt von den beiden eingegebenen Zeitdauern, nämlich von der Zeitdauer [t₉-t₅,] von dem berechneten Ende der Schnelllöschung des ersten Einspritzvorgangs bis zum Beginn des zweiten Einspritzvorgangs, und der Förderpause [t₉-t₆], die kürzerer Zeitdauer.

Die in der Minimumermittlungseinrichtung 40 ermittelte kürzere Zeitdauer wird an einen Vergleicher 41 ausgegeben. Der Vergleicher 41 vergleicht eine Schließzeit [t₉-t₈], die von einer Erfassungseinrichtung 42 erfasst worden ist, die der Erfassungseinrichtung 35 in Figur 5 entspricht, mit der von der Minimumermittlungseinrichtung 40 ausgegebenen Zeitdauer. Das Vergleichsergebnis wird an eine in der Abstandsänderungseinrichtung 25 angeordnete Verlängerungseinrichtung 43 ausgegeben, die den Wunschabstand [t₉-t₂] auf der Grundlage dieses Ergebnisses verändert.

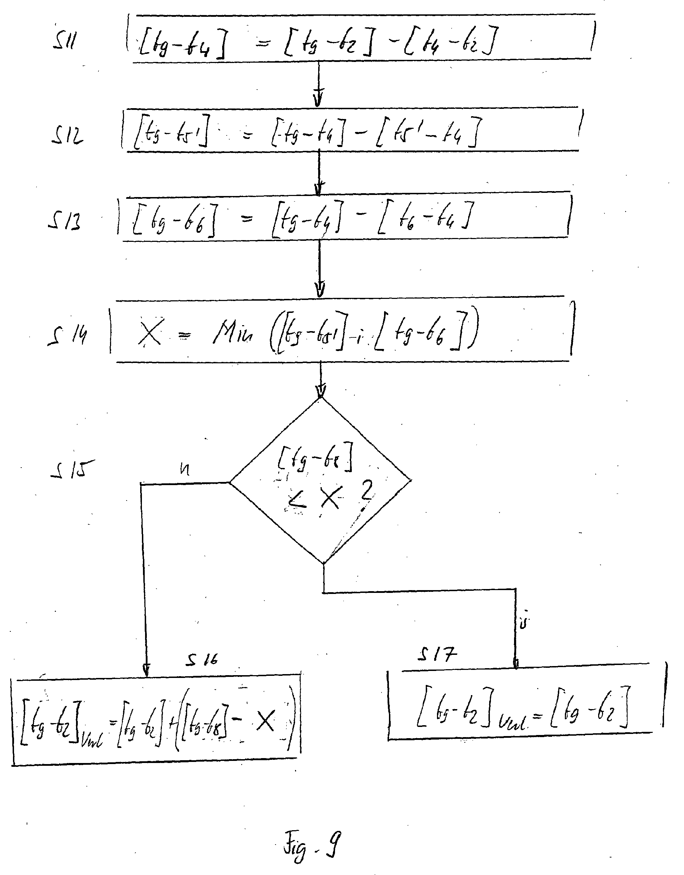

Ein Ausführungsbeispiel der Funktionsweise des in Figur 8 gezeigten Ausführungsbeispiels wird nun anhand des Flußdiagramms in Figur 9 beschrieben.

In Schritt S11 wird eine Zeitdauer [t₉-t₄] mittels Subtraktion der Förderdauer [t₄-t₂] von dem Wunschabstand [t₉-t₂] berechnet.

In Schritt S12 wird von der in Schritt S11 ermittelten Zeitdauer, die mit dem Dynamikfaktor korrigierte Schnelllöschungsdauer [t_{5'}-t₄], subtrahiert, die in der gleichen Weise wie mit Verweis auf Figur 5 beschrieben worden ist, ermittelt wurde.

In Schritt S13 wird die Förderpause [t₉-t₆] mittels Subtraktion der Absteuerdauer [t₆-t₄] von der in Schritt S11 ermittelten Zeitdauer [t₉-t₄] ermittelt. In Schritt S14 wird ermittelt, welche der beiden folgenden Zeitdauern, nämlich die in Schritt S12 ermittelte Zeitdauer [t₉-t_{5'}] oder die Förderdauer [t₉-t₆], die kürzere Zeitdauer ist. Die in Schritt S14 ermittelte kürzere Zeitdauer die in Figur 9 mit X bezeichnet ist, wird dann in Schritt S15 mit der Schließzeit [t₉-t₈] verglichen. Wenn die Schließzeit [t₉-t₈]größer als die in Schritt S14 ermittelte kürzere Zeitdauer X ist, wird der Wunschabstand [t₉-t₂] in Schritt S16 um die Dauer der Schließzeit [t₉-t₈] abzüglich der in Schritt S14 ermittelten Zeitdauer X verlängert. Dies ist in Figur 9 mit [t₉-t₂]ᵥₑᵣₗ = [t₉-t₂] + ([t₉-t₈] - X) dargestellt.

Wird in Schritt S15 festgestellt, dass die Schließzeit [t₉-t₈] kleiner oder gleich der in Schritt S14 ermittelten Zeitdauer ist, wird in Schritt S17 in gleicher Art und Weise wie in Schritt S4 in Figur 6 der Wunschabstand [t₉-t₂] nicht verändert.

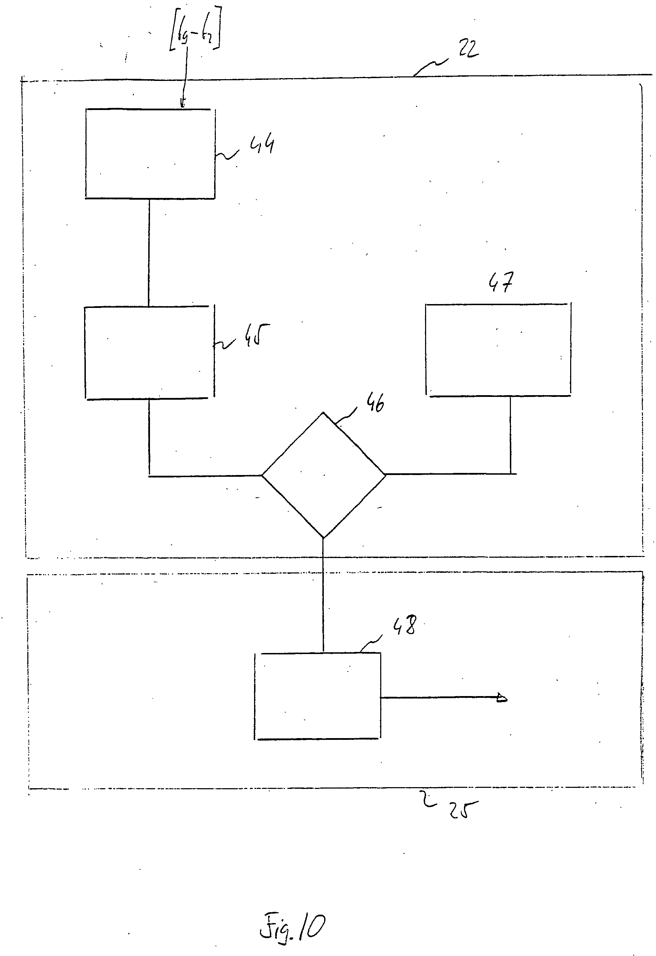

Figur 10 zeigt ein drittes Ausführungsbeispiel der Bestimmungseinrichtung 22 und der Abstandsänderungseinrichtung 25 von Figur 3.

Bezugsziffer 44 bezeichnet einen ersten Subtrahierer44, der die Zeitdauer [t₉-t₄] mittels Subtraktion der Förderdauer [t₄-t₂] von dem Wunschabstand [t₉-t₂] ermittelt. Der erste Subtrahierer 44 gibt das Subtraktionsergebnis an einen zweiten Subtrahierer 45 aus.

Der zweite Subtrahierer 45 subtrahiert von der Ausgabe des ersten Subtrahierers 44 die Schließzeit [t₉-t₈] der Ventilnadel 13 des Magnetventils 12. Das Subtraktionsergebnis des zweiten Subtrahierers 45 wird an einen Vergleicher 46 ausgegeben.

Die Bezugsziffer 47 bezeichnet eine Maximumermittlungseinrichtung. Die Maximumermittlungseinrichtung 47 ermittelt, welche der beiden folgenden Zeitdauern länger ist, die Absteuerdauer [t₆-t₄] des Magnetventils 12 oder die mit einem Dynamikfaktor korrigierte Schnelllöschungsdauer [t₅,-t₄]. Die Absteuerdauer [t₆-t₄] und die mit dem Dynamikfaktor korrigierte Schnelllöschungsdauer [t₅,-t₄] werden in der gleichen Art und Weise wie in den vorher beschriebenen Ausführungsbeispielen ermittelt. Deshalb wird auf eine detaillierte Beschreibung hierzu auf die vorhergehenden Ausführungsbeispiele verwiesen.

Das Ermittlungsergebnis der Maximumermittlungseinrichtung 47 wird an den Vergleicher 46 ausgegeben.

Der Vergleicher 46 vergleicht die beiden Eingangsgrößen, nämlich die Zeitdauer [t₈-t₄] zwischen zwei Bestromungsvorgängen des Magnetventils 12, mit der ermittelten längeren Zeitdauer der Absteuerdauer [t₆-t₄] und der mit einem Dynamikfaktor korrigierten Schnelllöschungsdauer [t_{5'}-t₄].

Das Vergleichsergebnis wird dann eine in der Abstandsänderungseinrichtung 25 angeordnete Verlängerungseinrichtung 48 ausgegeben, die den Wunschabstand [t₉ - t₂] auf der Grundlage dieses Vergleichs verlängert. Die Verlängerungseinrichtung 48 entspricht im wesentlichen der Verlängerungseinrichtung 36 in Figur 5 und der Verlängerungseinrichtung 43 in Figur 8. Dementsprechend wird auf eine detaillierte Beschreibung der Verlängerungseinrichtung 48 auf die Beschreibung zu diesen Figuren verwiesen.

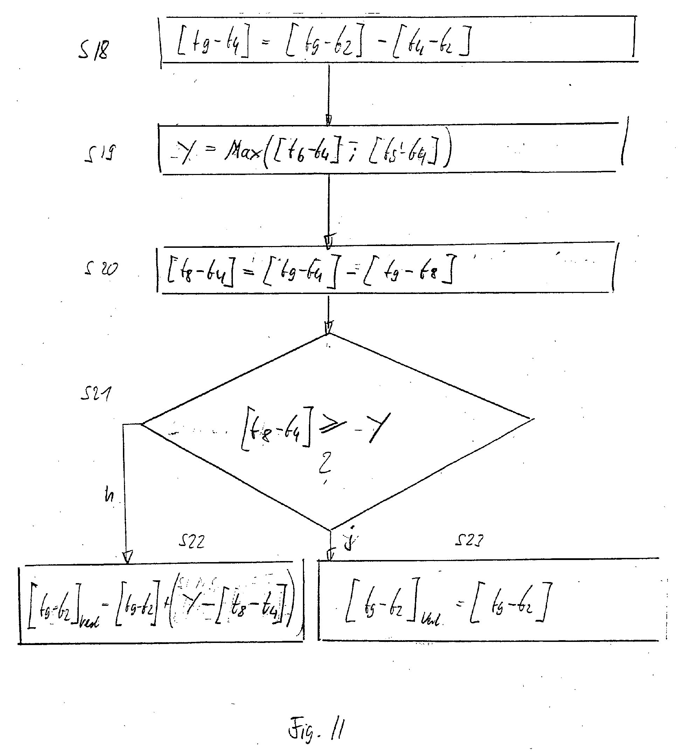

Im folgenden wird mit Verweis auf das Flußdiagramm von Figur 11 ein Ausführungsbeispiel der Funktionsweise des in Figur 10 gezeigten Ausführungsbeispiels beschrieben.

In Schritt S18 wird durch Subtraktion der Förderdauer [t₄-t₂] von dem Wunschabstand [t₉-t₂] eine Zeitdauer [t₉-t₄] berechnet. Dann geht die Verarbeitung weiter zu Schritt S19.

In Schritt S19 wird ermittelt, welche der beiden folgenden Zeitdauern die längere ist, die Absteuerdauer [t₆-t₄] oder die mit dem Dynamikfaktor korrigierten Schnelllöschungsdauer [t_{5'}-t₄], die in dergleichen Weise ermittelt wurde, wie mit Verweis auf Figur 5 beschrieben worden ist. Die ermittelte längere Zeitdauer ist in Figur 11 mit Y bezeichnet.

In Schritt S20 wird die Schließzeit [t₉-t₈] von der in Schritt S18 ermittelten Zeitdauer [t₉-t₄] subtrahiert. In Schritt S21 wird die in Schritt S19 ermittelte größere Zeitdauer Y mit der in Schritt S20 ermittelten Zeitdauer [t₈-t₄] verglichen.

Wird in Schritt S21 ermittelt, dass die in Schritt S20 ermittelte Zeitdauer [t₈-t₄] größer oder gleich der in Schritt S19 ermittelten längeren Zeitdauer Y von der Absteuerdauer [t₆-t₄] und der mit dem Dynamikfaktor korrigierten Schnelllöschung [t_{5'}-t₄] ist, wird in Schritt S22 der Wunschabstand [t₉-t₂] nicht verändert.

Wird in Schritt S21 ermittelt, dass die in Schritt S19 ermittelte größere Zeitdauer größer als die in Schritt S20 ermittelte Zeitdauer [t₈-t₄] ist, wird in Schritt S23 der Wunschabstand [t₉-t₂] um die Zeitdauer Y abzüglich der Zeitdauer [t₈-t₄] verlängert. Dies ist in Figur 11 mit [t₉-t₂]ᵥₑᵣₗ = [t₉-t₂] + (Y - [t₈-t₄]) dargestellt.

Statt der Maximumermittlungseinrichtung 47 kann auch der Vergleicher 46 ausgestaltet werden [t₆-t₄] und [t₅,-t₄] mit [t₈-t₄] zu vergleichen. Dann geht die Verarbeitung von Schritt S21 weiter zu Schritt S22 wenn [t₈-t₄] kleiner als sowohl [t₆-t₄], als auch [t₅,-t₄] ist, und sonst zu Schritt S23.

Die weiteren in dem Ausführungsbeispiel von Figur 10 verwendeten Größen werden in der gleichen Art und Weise wie in den zuvor beschriebenen Ausführungsbeispielen ermittelt.

Die vorliegende Erfindung ermöglicht somit vorteilhaft eine Überwachung des Wunschabstands [t₉-t₂], ohne das eine Erfassung der tatsächlichen Position der Düsennadel 17 erforderlich ist. Dies ist insbesondere deshalb vorteilhaft, da eine Erfassung der Düsennadelbewegung und -position aufgrund der unzugänglichen Position in dem Zylinderkopf einer Brennkraftmaschine sehr aufwendig ist.

In den zuvor beschriebenen Ausführungsbeispielen wurden zum Zwecke der Illustration lediglich Zeitdauern verwendet. Es ist jedoch möglich, je nach derArt der Erfassung der Zeitdauern, die entsprechenden Größen in Kurbelwinkeleinheiten °KW anzugeben.

Alle Einrichtungen der Bestimmungseinrichtung 22 und der Abstandsänderungseinrichtung 25 werden vorzugsweise mittels einer Mikroprozessoreinrichtung oder einer programmierbaren Logikeinrichtung wie beispielsweise einem EPLD ausgestaltet.

## Patentansprüche

1. Verfahren zur Überwachung eines Abstands ([t₉-t₂]) zwischen einem ersten Einspritzvorgang und einem zweiten Einspritzvorgang eines Verbrennungszyklusses eines Zylinders einer Brennkraftmaschine in der die einzelnen Einspritzvorgänge mit einem elektrischen Betätigungsglied gesteuert werden, umfassend folgende Schritte:
- Bestimmen, ob sich das Betätigungsglied (12, 13) nach dem ersten Einspritzvorgang vollständig geöffnet hat;
- Bestimmen, ob sich Bestromungssequenzen (27, 28) des elektrischen Betätigungsglieds (12, 13) für den ersten Einspritzvorgang und für den zweiten Einspritzvorgang überlappen; und
- Verändern des Abstands ([t₉-t₂]) wenn sich das elektrische Betätigungsglied (12, 13) nach dem ersten Einspritzvorgang nicht vollständig geöffnet hat oder wenn sich die Bestromungssequenzen (27, 28) des elektrischen Betätigungsglieds (12, 13) überlappen.

2. Verfahren nach Anspruch 1, **gekennzeichnet durch** folgende Schritte:
- Bestimmen (S3, S8), ob sich das elektrische Betätigungsglied (12, 13) nach dem ersten Einspritzvorgang vollständig geöffnet hat und ob sich die Bestromungssequenzen (27, 28) des elektrischen Betätigungsglieds (12, 13) überlappen **durch** Vergleichen einer Schließzeit ([t₉-t₈]) des elektrischen Betätigungsglieds (12, 13) mit einer ersten Zeitdauer ([t₉-t₅,]) von einem berechneten Ende einer Schnelllöschung des ersten Einspritzvorgangs bis zum Beginn des zweiten Einspritzvorgangs und einer Förderpause ([t₉-t₆]); und
- Verlängern (S4, S5, S9, S10) des Abstands ([t₉-t₂]) auf der Grundlage des Vergleichs der Schließzeit ([t₉-t₈]) des elektrischen Betätigungsglieds (12, 13) mit der ersten Zeitdauer ([t₉-t_{5'}]) und der Förderpause ([t₉-t₆]).

3. Verfahren nach Anspruch 1, **gekennzeichnet durch** folgende Schritte:
- Ermitteln (S14) einer kürzeren Zeitdauer der ersten Zeitdauer ([t₉-t_{5'}]) von einem berechneten Ende einer Schnelllöschung des ersten Einspritzvorgangs bis zum Beginn des zweiten Einspritzvorgangs und der Förderpause ([t₉-t₆]);
- Bestimmen (S15), ob sich das elektrische Betätigungsglied (12, 13) nach dem ersten Einspritzvorgang vollständig geöffnet hat und ob sich die Bestromungssequenzen (27, 28) des elektrischen Betätigungsglieds (12, 13) überlappen **durch** Vergleichen der Schließzeit ([t₉-t₈]) des elektrischen Betätigungsglieds (12, 13) mit der ermittelten kürzeren Zeitdauer der ersten Zeitdauer ([t₉-t_{5'}]) und der Förderpause ([t₉-t₆]); und
- Verlängern (S16, S17) des Abstands ([t₉-t₂]) auf der Grundlage dieses Vergleichs.

4. Verfahren nach einem der Ansprüche 2 oder 3, **gekennzeichnet durch** folgende Schritte:
- Ermitteln (S1, S6, S11, S18) einer zweiten Zeitdauer ([t₉-t₄]) mittels Subtraktion einer Förderdauer ([t₄-t₂]) von dem Abstand ([t₉-t₂]);
- Ermitteln (S2, S13) der Förderpause ([t₉-t₆]) mittels Subtraktion einer Absteuerdauer ([t₆-t₄]) des elektrischen Betätigungsglieds (12, 13) von der zweiten Zeitdauer ([t₉-t₄]);
- Berechnen einer mit dem Dynamikfaktor korrigierten Schnelllöschungsdauer ([t₅,-t₄]) mittels Berechnung einer Schnelllöschungsdauer ([t₅-t₄]) vor dem Beginn des ersten Einspritzvorgangs und Multiplikation der Schnelllöschungsdauer ([t₅t₄]) mit einem Dynamikfaktor, der auf der Grundlage einer Drehzahlerhöhung **durch** die Einspritzung ermittelt wird;
- Ermitteln (S7, S12) der ersten Zeitdauer ([t₉-t₅,]) mittels Subtraktion der mit dem Dynamikfaktor korrigierten Schnelllöschungsdauer ([t₅,-t₄]) von der zweiten Zeitdauer ([t₉-t₄]).

5. Verfahren nach Anspruch 1, **gekennzeichnet durch** folgende Schritte:
- Bestimmen, ob sich das elektrische Betätigungsglied (12, 13) nach dem ersten Einspritzvorgang vollständig geöffnet hat und ob sich die Bestromungssequenzen (27, 28) des elektrischen Betätigungsglieds (12, 13) überlappen **durch** Vergleichen einer dritten Zeitdauer ([t₈-t₄]) zwischen zwei Bestromungsvorgängen des elektrischen Betätigungsglieds (12, 13) mit der Absteuerdauer ([t₆-t₄]) des elektrischen Betätigungsglieds (12, 13) und der mit dem Dynamikfaktor korrigierten Schnelllöschungsdauer ([t_{5'}-t₄]);
- Verlängern des Abstands ([t₉-t₂]) auf der Grundlage dieses Vergleichs.

6. Verfahren nach Anspruch 1, **gekennzeichnet durch** folgende Schritte:
- Ermitteln (S19) der längeren Zeitdauer der Absteuerdauer ([t₆-t₄]) und der mit dem Dynamikfaktor korrigierten Schnelllöschungsdauer ([t_{5'}-t₄]);
- Bestimmen, ob sich das elektrische Betätigungsglied (12, 13) nach dem ersten Einspritzvorgang vollständig geöffnet hat und ob sich die Bestromungssequenzen (27, 28) des elektrischen Betätigungsglieds (12, 13) überlappen **durch** Vergleichen der dritten Zeitdauer ([t₈-t₄]) zwischen zwei Bestromungsvorgängen des elektrischen Betätigungsglieds (12, 13) mit der ermittelten längeren Zeitdauer der Absteuerdauer ([t₆-t₄]) und mit der mit dem Dynamikfaktor korrigierten Schnelllöschungsdauer ([t₅,-t₄]);
- Verlängern (S22, S23) des Abstands ([t₉-t₂]) auf der Grundlage dieses Vergleichs.

7. Verfahren nach einem der Ansprüche 2 bis 6, **gekennzeichnet durch** folgenden Schritt:
- Verlängern (S22, S23) des Abstands ([t₉-t₂]) um die Dauer der Schließzeit ([t₉t₈]) des elektrischen Betätigungsglieds (12, 13) abzüglich der Förderpause ([t₉t₆]).

8. Verfahren nach einem der Ansprüche 5, 6 oder 7 ferner umfassend folgende Schritte:
- Ermitteln (S18) der zweiten Zeitdauer ([t₉-t₄]) mittels Subtraktion einer Förderdauer ([t₄-t₂]) von dem Abstand ([t₉-t₂]);
- Ermitteln der dritten Zeitdauer ([t₈-t₄]) durch Subtraktion der Schließzeit ([t₉-t₈]) des elektrischen Betätigungsglieds (12, 13) von der zweiten Zeitdauer ([t₉-t₄]);
- Berechnen der mit dem Dynamikfaktor korrigierten Schnelllöschungsdauer ([t₅,t₄]) mittels Berechnung der Schnelllöschungsdauer ([t₅-t₄]) vor dem Beginn des ersten Einspritzvorgangs und Multiplikation der Schnelllöschungsdauer ([t₅-t₄]) mit dem Dynamikfaktor, der auf der Grundlage einer Drehzahlerhöhung durch die Einspritzung ermittelt wird.

9. Vorrichtung zur Überwachung eines Abstands ([t₉-t₂]) zwischen einem ersten Einspritzvorgang und einem zweiten Einspritzvorgang eines Verbrennungszyklusses eines Zylinders einer Brennkraftmaschine in der die einzelnen Einspritzvorgänge mit einem elektrischen Betätigungsglied (12, 13) gesteuert werden, umfassend:
- eine Bestimmungseinrichtung (22) zum Bestimmen ob sich das elektrische Betätigungsglied (12, 13) nach dem ersten Einspritzvorgang vollständig geöffnet hat und zum Bestimmen ob sich Bestromungssequenzen (27, 28) des elektrischen Betätigungsglieds (12, 13) für den ersten Einspritzvorgang und für den zweiten Einspritzvorgang überlappen; und
- eine Abstandsänderungseinrichtung (25) zum Verändern des Abstands ([t₉-t₂]) wenn sich das elektrische Betätigungsglied (12, 13) nach dem ersten Einspritzvorgang nicht vollständig geöffnet hat oder wenn sich die Bestromungssequenzen (27, 28) des elektrischen Betätigungsglieds (12, 13) überlappen.

10. Vorrichtung nach Anspruch 9, **dadurch gekennzeichnet, dass**
- die Bestimmungseinrichtung (22) einen ersten Vergleicher (34) aufweist, zum Vergleichen einer Schließzeit ([t₉-t₈]) des elektrischen Betätigungsglieds (12, 13) mit einer ersten Zeitdauer ([t₉-t_{5'}]) von einem berechneten Ende einer Schnelllöschung des ersten Einspritzvorgangs bis zum Beginn des zweiten Einspritzvorgangs und einer Förderpause ([t₉-t₆]); und
- die Abstandsänderungseinrichtung (25) eine Verlängerungseinrichtung (36) aufweist, zum Verlängern des Abstands ([t₉-t₂]) auf der Grundlage des Vergleichs der Schließzeit ([t₉-t₈]) des elektrischen Betätigungsglieds (12, 13) mit der ersten Zeitdauer ([t₉-t₅,]) und der Förderpause ([t₉-t₆]).

11. Vorrichtung nach Anspruch 9, **dadurch gekennzeichnet, dass**
- die Bestimmungseinrichtung (22)
- eine Minimumermittlungseinrichtung (40) zum Ermitteln einer kürzeren Zeitdauer der ersten Zeitdauer ([t₉-t_{5'}]) von einem berechneten Ende einer Schnelllöschung des ersten Einspritzvorgangs bis zum Beginn des zweiten Einspritzvorgang und der Förderpause ([t₉-t₆]), und
- einen zweiten Vergleicher (41) zum Vergleichen der Schließzeit ([t₉-t₈]) des elektrischen Betätigungsglieds (12, 13) mit der ermittelten kürzeren Zeitdauer der ersten Zeitdauer ([t₉-t_{5'}]) und der Förderpause ([t₉-t₆]) aufweist; und
- die Abstandsänderungseinrichtung (25) eine Verlängerungseinrichtung (43) aufweist, zum Verlängern des Abstands ([t₉-t₂]) auf der Grundlage dieses Vergleichs.

12. Vorrichtung nach einem der Ansprüche 9, 10 oder 11, **gekennzeichnet durch**
- einen ersten Subtrahierer (31, 37) zum Ermitteln einer zweiten Zeitdauer ([t₉-t₄]) mittels Subtraktion einer Förderdauer ([t₄-t₂]) von dem Abstand ([t₉-t₂]);
- einen zweiten Subtrahierer (32, 38) zum Ermitteln der Förderpause ([t₉-t₆]) mittels Subtraktion einer Absteuerdauer ([t₆-t₄]) des elektrischen Betätigungsglieds (12, 13) von der zweiten Zeitdauer ([t₉-t₄]);
- eine Berechnungseinrichtung zum Berechnen einer mit dem Dynamikfaktor korrigierten Schnelllöschungsdauer ([t_{5'}-t₄]) mittels Berechnung einer Schnelllöschungsdauer ([t₅-t₄]) vor dem Beginn des ersten Einspritzvorgangs und Multiplikation der Schnelllöschungsdauer ([t₅-t₄]) mit einem Dynamikfaktor, der auf der Grundlage einer Drehzahlerhöhung **durch** eine Einspritzung ermittelt wird; und
- einen dritten Subtrahierer (33, 39) zum Ermitteln der ersten Zeitdauer ([t₉-t₅,]) mittels Subtraktion der mit dem Dynamikfaktor korrigierten Schnelllöschungsdauer ([t₅,-t₄]) von der zweiten Zeitdauer ([t₉-t₄]).

13. Vorrichtung nach Anspruch 9, **dadurch gekennzeichnet, dass**
- die Bestimmungseinrichtung (22) einen dritten Vergleicher aufweist, zum Vergleichen einer dritten Zeitdauer ([t₈-t₄]) zwischen zwei Bestromungsvorgängen des elektrischen Betätigungsgliedes (12, 13) mit der Absteuerdauer ([t₆-t₄]) des elektrischen Betätigungsglieds (12, 13) und der mit dem Dynamikfaktor korrigierten Schnelllöschungsdauer ([t_{5'}-t₄]); und
- die Abstandsänderungseinrichtung (25) eine Verlängerungseinrichtung (47) zum Verlängern des Abstands ([t₉-t₂]) auf der Grundlage dieses Vergleichs aufweist.

14. Vorrichtung nach Anspruch 9, **dadurch gekennzeichnet, dass**
- die Bestimmungseinrichtung (22)
- eine Maximumermittlungseinrichtung (47) zum Ermitteln der längeren Zeitdauer der Absteuerdauer ([t₆-t₄]) des elektrischen Betätigungsglieds (12, 13) und der mit dem Dynamikfaktor korrigierten Schnelllöschungsdauer ([t₅,-t₄]), und
- einen Vergleicher (46) zum Vergleichen einer dritten Zeitdauer ([t₈-t₄]) zwischen zwei Bestromungsvorgängen (12, 13) des elektrischen Betätigungsglieds (12, 13) mit der ermittelten längeren Zeitdauer der Absteuerdauer ([t₆-t₄]) und der mit einem Dynamikfaktor korrigierten Schnelllöschungsdauer ([t_{5'}-t₄]) aufweist; und
- die Abstandsänderungseinrichtung (25) eine Verlängerungseinrichtung (48) aufweist, zum Verlängern des Abstands ([t₉-t₂]) auf der Grundlage dieses Vergleichs.

15. Verfahren nach einem der Ansprüche 10, 11, 13 oder 14, **dadurch gekennzeichnet, dass**
- die Verlängerungseinrichtung (48) den Abstands ([t₉-t₂]) um die Dauer der Schließzeit ([t₉-t₈]) des elektrischen Betätigungsglieds (12, 13) abzüglich der Förderpause ([t₉-t₆])verlängert.

16. Vorrichtung nach einem der Ansprüche 13, 14 oder 15, **gekennzeichnet durch**
- einen ersten Subtrahierer (44) zum Ermitteln der zweiten Zeitdauer ([t₉-t₄]) mittels Subtraktion der Förderdauer ([t₄-t₂]) von dem Abstand ([t₉-t₂]);
- einen zweiten Subtrahierer (45) zum Ermitteln der dritten Zeitdauer ([t₈-t₄]) **durch** Subtraktion der Schließzeit ([t₉-t₈]) des elektrischen Betätigungsglieds (12, 13) von der zweiten Zeitdauer ([t₉-t₄]); und
- eine Berechnungseinrichtung zum Berechnen der mit dem Dynamikfaktor korrigierten Schnelllöschungsdauer ([t₅,-t₄]) mittels Berechnung der Schnelllöschungsdauer ([t₅-t₄]) vor dem Beginn des ersten Einspritzvorgangs und Multiplikation der Schnelllöschungsdauer ([t₅-t₄]) mit dem Dynamikfaktor, der auf der Grundlage einer Drehzahlerhöhung **durch** eine Einspritzung ermittelt wird.
